# EUROPÄISCHE PATENTSCHRIFT

(11) **EP 3 736 074 B1**
(45) Veröffentlichungstag und Bekanntmachung des Hinweises auf die Patenterteilung: **26.01.2022**
(21) Anmeldenummer: 20164084.4
(22) Anmeldetag: 19.03.2020
(51) Int. Cl.: B23K 10/00, B23K 15/08, B23K 26/08, B23K 26/14, B23K 26/38, B23K 37/02, B23K 37/04, G05B 19/18

(54) **VERFAHREN ZUM TRENNENDEN SCHNEIDEN EINER MEHRZAHL VON WERKSTÜCKTEILEN**
METHOD OF SEPARATING A PLURALITY OF WORKPIECE PARTS BY MEANS OF CUTTING
PROCÉDÉ DE DÉCOUPE PAR SÉPARATION D'UNE PLURALITÉ DE PIÈCES

(30) Priorität: 02.05.2019 DE 102019206274
(43) Veröffentlichungstag der Anmeldung: 11.11.2020
(73) Patentinhaber: TRUMPF Werkzeugmaschinen GmbH + Co. KG, 71254 Ditzingen (DE)
(72) Erfinder: Burger, Dr. Dieter, 71665 Vaihingen an der Enz (DE); Mach, Patrick, 71384 Weinstadt (DE); SEPP, Florian, 86972 Altenstadt (DE); Weiß, Dr. Christoph, 86971 Peiting (DE)
(74) Vertreter: Kohler Schmid Möbus Patentanwälte

(56) Entgegenhaltungen:
- DE-A1-102012 212 566
- DE-B3-102014 200 208
- DE-B4-102012 212 566
- JP-A- H0 455 076
- JP-A- S63 149 072
- US-A1- 2008 053 977

## Beschreibung

### Hintergrund der Erfindung

Die Erfindung betrifft ein Verfahren zum trennenden Schneiden einer Mehrzahl von Werkstückteilen aus einem plattenförmigen Werkstück.

Verfahren zur trennenden Bearbeitung eines plattenförmigen Werkstücks mit auszuschneidenden Werkstückteilen sind in der DE 10 2014 200 208 B3 und der DE 10 2012 212 566 A1 (Basis für den Oberbegriff des Anspruchs 1) beschrieben. In den genannten Verfahren dient eine Reihe von Maßnahmen der Vermeidung einer Kollision zwischen kippenden ausgeschnittenen Werkstückteilen und dem Schneidkopf. In einer Variante des in der DE 10 2012 212 566 A1 beschriebenen Verfahrens werden Werkstückteile zu Clustern zusammengefasst und die meisten Verfahrensschritte für jeden Cluster separat durchgeführt.

Beim trennenden Schneiden von eng geschachtelten Werkstückteilen mittels eines thermischen Bearbeitungsstrahls, insbesondere beim Laserschneiden, kann es dazu kommen, dass eine Werkstücktafel, z.B. eine Blechtafel, teilweise thermisch überlastet wird. Die durch den Laserstrahl in das Werkstück eingebrachte Wärme verteilt sich durch Wärmeleitung auf die gesamte Blechtafel und heizt diese kontinuierlich auf. Dadurch kann es zu thermisch induzierten Spannungen und zum Verzug der Blechtafel und der geschnittenen Werkstückteile kommen. Speziell beim Brennschneiden mit Sauerstoff als Schneidgas kann eine überhitzte Blechtafel außerdem zum sogenannten Selfburning führen, bei dem die Oxidationsreaktion zu stark verläuft und Qualitätseinbußen der erzeugten Schneidkanten verursacht.

In der US2008/0053977 A1 ist ein System zur Vermeidung von wärmebedingten Defekten bei der Laserprozessierung von Werkstücken aus einem Grundmaterial beschrieben. Das genannte System sieht eine Anpassung der Reihenfolge der Prozessierung der einzelnen Werkstücke vor. Zusätzlich sind Wartezeiten während der Bearbeitung vorgesehen, falls die Optimierung der Reihenfolge nicht ausreicht.

Aus US9434024B2 oder KR102012004793A ist es bekannt, an besonders wärmebelasteten Teilen einer Kontur eines zu schneidenden Werkstückteils lokale, kurze Entlastungsschnitte einzubringen. Das Schneiden dieser Entlastungsschnitte erfolgt während der Bearbeitung der eigentlichen Schneidkontur.

Aus JPS62238088A ist es bekannt, beim Bohren ein plattenförmiges Werkstück einzuspannen und kurze Entlastungsschlitze in das Werkstück einzubringen, um lokale Spannungen und Verformungen abzubauen.

### Aufgabe der Erfindung

Der vorliegenden Erfindung stellt sich die Aufgabe, die Schneidqualität und Prozesssicherheit beim trennenden Schneiden vieler eng geschachtelter Werkstückteile aus einem plattenförmigen Werkstück zu verbessern.

### Beschreibung der Erfindung

Diese Aufgabe wird gelöst durch ein Verfahren zum trennenden Schneiden einer Mehrzahl von Werkstückteilen aus einem plattenförmigen Werkstück mittels eines Bearbeitungsstrahls, bei dem die Mehrzahl von Werkstückteilen in mindestens zwei Gruppen von Werkstückteilen eingeteilt wird und ein trennendes Schneiden der Werkstückteile aus dem plattenförmigen Werkstück Gruppe für Gruppe durchgeführt wird. Vor dem gruppenweisen trennenden Schneiden der Werkstückteile wird mindestens ein Entlastungsschnitt in das plattenförmige Werkstück eingebracht. Dabei verläuft oder verlaufen entweder ein oder mehrere Entlastungsschnitte entlang derjenigen Außenkonturen von mindestens zwei benachbarten Werkstückteilen einer der Gruppen, die einer benachbarten Gruppe zugewandt sind. Alternativ verläuft der mindestens eine Entlastungsschnitt zwischen den einander zugewandten Außenkonturen von Werkstückteilen von mindestens zwei benachbarten Gruppen. Das trennende Schneiden kann beispielsweise durch einen Laserstrahl oder einen Plasmastrahl als Bearbeitungsstrahl erfolgen.

Bei dem erfindungsgemäßen Schneidverfahren werden die Werkstückteile, die einer jeweiligen Gruppe zugeordnet sind, nacheinander vom (Rest-)Werkstück getrennt, bevor die Werkstückteile, die einer anderen Gruppe zugeordnet sind, vom Restwerkstück getrennt werden, d.h. das trennende Schneiden erfolgt Gruppe für Gruppe. Vor dem trennenden Schneiden der Werkstückteile, die den Gruppen zugeordnet sind, wird mindestens ein Entlastungsschnitt zwischen die Werkstückteile von mindestens zwei benachbarten Gruppen bzw. entlang der einer benachbarten Gruppe zugewandten Außenkonturen der Werkstückteile einer jeweiligen Gruppe eingebracht. In letzterem Fall verläuft der Entlastungsschnitt entlang eines Abschnitts der Schneidkontur eines Werkstückteils einer jeweiligen Gruppe, d.h. das Schneiden der Konturen von Werkstückteilen wird bereits mit dem Entlastungsschnitt begonnen. Das trennende Schneiden, bei dem die Werkstückteile einer jeweiligen Gruppe vom Rest-Werkstück getrennt werden, erfolgt jedoch erst, nachdem der bzw. die Entlastungsschnitte in das Werkstück eingebracht wurden. Unter den einander zugewandten Außenkonturen der jeweiligen Werkstückteile werden im Sinne dieser Anmeldung Abschnitte der Außenkonturen der Werkstückteile verstanden, entlang derer sich die Werkstückteile gegenüberliegen.

Durch den/die Entlastungsschnitte wird beim Schneiden der (restlichen) Außenkonturen der Werkstückteile einer jeweiligen Gruppe die Wärmeleitung in das umliegende Werkstück reduziert. Die Schnittspalte, welche durch die Entlastungsschnitte entstehen, sorgen für einen schlechteren Wärmeübergang, da durch die Entlastungsschnitte der Wärmeübergang nun in der Luft erfolgt. Auf diese Weise wird die Ausbreitung von thermisch induzierten Spannungen von einer Gruppe auf eine benachbarte Gruppe von Werkstückteilen verhindert. Durch die Entlastungsschnitte kann die nachfolgende Wärme, welche beim Bauteilschneiden entsteht, lokal begrenzt werden. Auch die entstehenden mechanischen Spannungen bleiben lokal begrenzt oder werden durch den Spalt der Entlastungsschnitte abgebaut. Wärmeverzug, Spannungen der Blechtafel und der Bauteile sowie Selfburning lassen sich dadurch vermeiden oder weitgehend reduzieren. Insbesondere beim Brennschneiden von Baustahl mit einer Werkstückdicke von mehr als 3 mm und eng verschachtelten Werkstückteilen wirkt sich das erfindungsgemäße Verfahren vorteilhaft auf die erzielbare Teilequalität aus.

Insbesondere, wenn der Abstand zweier benachbarter Gruppen von Werkstückteilen kleiner 12 mm ist, ist es von Vorteil, zwischen die einander zuwandten Au-ßenkonturen der beiden Gruppen einen Entlastungsschnitt zu setzen oder mindestens einen Entlastungsschnitt entlang einer oder entlang von beiden einander zugewandten Außenkonturen benachbarter Gruppen zu setzen. Das Setzen bzw. Einbringen von Entlastungsschnitten entlang von Außenkonturen, die auch zugleich Schneidkonturen von Werkstückteilen sind, hat den Vorteil, dass durch die Entlastungsschnitte keine zusätzlichen Schnitte in das Werkstück eingebracht werden müssen. Dies erhöht die Effizienz des Verfahrens.

In einer Variante wird entlang von einander zugewandten Außenkonturen von Werkstückteilen zweier benachbarter Gruppen jeweils ein Entlastungsschnitt eingebracht. Das beidseitige Einbringen von Entlastungsschnitten, die jeweils entlang der einander gegenüberliegender Außenkonturen von Werkstückteilen benachbarter Gruppen verlaufen, stellt die bevorzugte Variante dar, um die Wärmeleitung zu reduzieren.

In einer weiteren Variante des Verfahrens werden mindestens zwei getrennte Entlastungsschnitte entlang der Außenkonturen von mindestens zwei benachbarten Werkstückteilen derselben Gruppe in das Werkstück eingebracht. Bei dieser Variante verlaufen die Entlastungsschnitte ausschließlich entlang der Außenkonturen der Werkstückteile, aber nicht zwischen den Werkstückteilen, so dass Entlastungsschnitte mit den Konturschnitten bzw. mit einem Abschnitt der Außenkonturen der Werkstückteile übereinstimmen und keine zusätzlichen Schnitte im plattenförmigen Werkstück gebildet werden.

In einer alternativen Variante erstreckt sich der mindestens eine Entlastungsschnitt entlang der einander zugewandten Außenkonturen der Werkstückteile einer Gruppe und verbindet die Außenkonturen miteinander. Dies hat den Vorteil, dass der Entlastungsschnitt nicht unterbrochen werden muss, sondern weitergeführt werden kann, wodurch ein mehrmaliges Einstechen in das Werkstück vermieden werden kann, wie dies beim Einbringen von mehreren Entlastungsschnitten erforderlich ist.

In einer weiteren Variante umfasst das trennende Schneiden eines Werkstückteils der Mehrzahl von Werkstückteilen folgende Schritte: Schneiden eines Abschnitts einer Außenkontur des Werkstückteils zum teilweisen Trennen des Werkstückteils von dem plattenförmigen Werkstück, Schneiden mindestens einer Innenkontur des Werkstückteils, sowie Freischneiden des Werkstückteils von dem Werkstück entlang eines weiteren Abschnitts der Außenkontur. Hierdurch bleibt die beim Schneiden der Innenkontur(en) entstehende Wärme in dem nahezu freigeschnittenen Werkstückteil gefangen und das umliegende restliche plattenförmige Werkstück verzieht sich nicht.

Vorteilhafterweise beträgt der Abschnitt, entlang dessen das Werkstückteil teilweise von dem Werkstück getrennt wird, mindestens 60%, bevorzugt mindestens 75 %, insbesondere mindestens 90% der Gesamtlänge der Außenkontur und nicht mehr als 95% der Gesamtlänge der Außenkontur.

Weitere Vorteile der Erfindung ergeben sich aus der Beschreibung und der Zeichnung.

Die gezeigten und beschriebenen Ausführungsformen sind nicht als abschließende Aufzählung zu verstehen, sondern haben vielmehr beispielhaften Charakter für die Schilderung der Erfindung.
- Fig. 1: zeigt eine Laserschneidmaschine zur Durchführung der erfindungsgemäßen Verfahren;
- Fig. 2: zeigt ein Beispiel von vier Gruppen von Werkstückteilen mit Entlastungsschnitten, die jeweils zwischen zwei benachbarten Gruppen verlaufen;
- Fig. 3: zeigt ein Beispiel analog zu Fig. 2, bei dem mehrere voneinander getrennte Entlastungsschnitte entlang von einander zugewandten Außenkonturen von Werkstückteilen verlaufen;
- Fig. 4: zeigt ein Beispiel analog zu Fig. 3, bei dem ein Entlastungsschnitt die gegenüberliegenden Außenkonturen mehrerer benachbarter Werkstückteile verbindet, und
- Fig. 5: zeigt schematisch ein Werkstückteil mit Innenkonturen beim trennenden Schneiden mittels eines Laserstrahls.

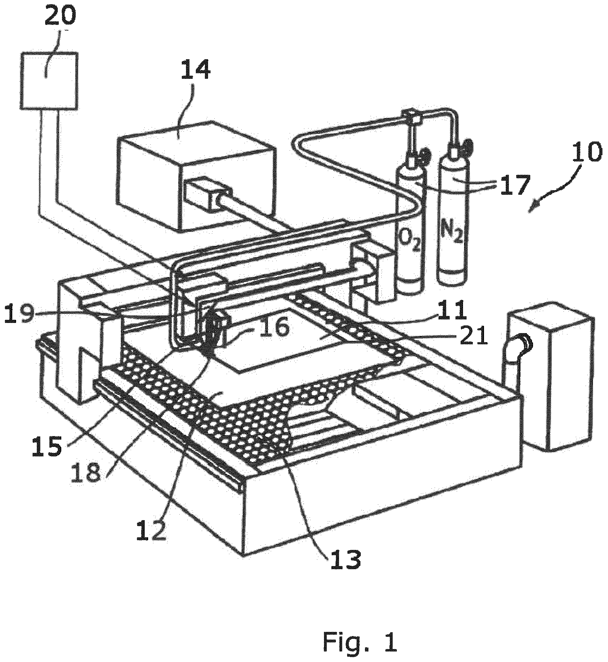

**Fig.1** zeigt eine Laserschneidmaschine 10 zum Laserschneiden eines plattenförmigen Werkstücks 12, das auf einer Werkstückauflage 13 angeordnet ist. Die Laserschneidmaschine 10 weist einen Laserstrahlerzeuger 14 auf, der in diesem Ausführungsbeispiel als CO2-Laser ausgebildet ist. In alternativen Ausführungsformen ist vorgesehen, den Laserstrahlerzeuger 14 als Diodenlaser oder Festkörperlaser auszubilden. Weiter ist der Fig. 1 ein Schneidkopf 15 zu entnehmen. Im Laserstrahlerzeuger 14 wird ein Laserstrahl 16 erzeugt, der mittels Umlenkspiegeln vom Laserstrahlerzeuger 14 zum Schneidkopf 15 geführt wird. Der Laserstrahl 16 wird mittels einer im Schneidkopf 15 angeordneten Fokussieroptik auf das Werkstück 12 fokussiert. In den alternativen Fällen, bei denen ein Diodenlaser oder ein Festkörperlaser zum Einsatz kommt, wird der Laserstrahl über einen Lichtleiter vom Laserstrahlerzeuger 14 zum Schneidkopf 15 geführt.

Die Laserschneidmaschine 10 wird darüber hinaus mit Schneidgasen 17, in diesem Ausführungsbeispiel Sauerstoff und Stickstoff, versorgt. Die Schneidgase 17 gelangen druckgeregelt in eine Düse (Schneidgasdüse) 18 des Schneidkopfs 15, aus der sie zusammen mit dem Laserstrahl 16 austreten. Die Laserschneidmaschine 10 umfasst des Weiteren optische Elemente, beispielsweise adaptive Optiken 19 oder mehrere Linsen einer Zoom-Optik, mit denen Fokuslage und Fokusdurchmesser des Laserstrahls 16 variiert bzw. eingestellt werden können. Ferner weist die Laserschneidmaschine 10 eine Maschinensteuerung 20 auf. Die Maschinensteuerung 20 ist eingerichtet, sowohl den Schneidkopf 15 mitsamt der Schneidgasdüse 18 relativ zum Werkstück 12 zu verfahren als auch die Optik 19 anzusteuern. Die Maschinensteuerung 20 dient bei dem in Fig. 1 gezeigten Beispiel dazu, ein Werkstückteil 11 entlang einer Außenkontur 21 von dem Werkstück 12 durch schneidendes Bearbeiten zu trennen. Insbesondere ist die Maschinensteuerung 20 eingerichtet, die im Folgenden näher beschriebenen Verfahren auf der Laserschneidmaschine 10 auszuführen.

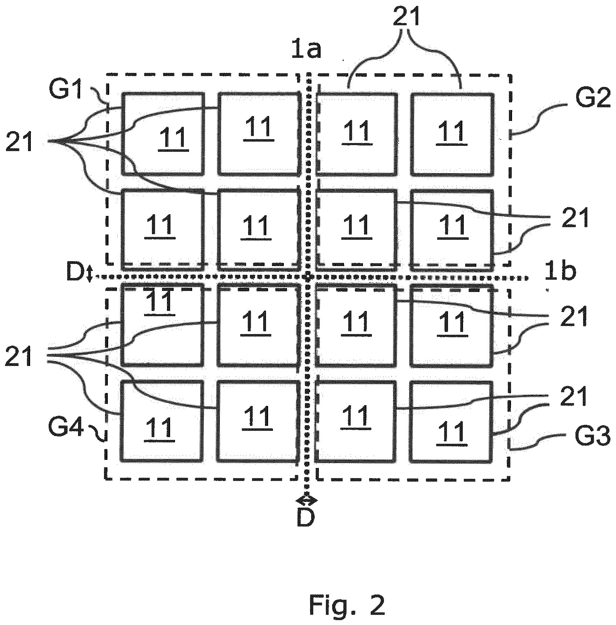

Bei dem in **Fig. 2** gezeigten Beispiel sollen aus dem plattenförmigen Werkstück 12 aus Baustahl mit einer Dicke von 10 mm mit einer Laserleistung von 6 kW sechzehn quadratische Werkstückteile 11 mit Abmessungen von 50 mm x 50 mm ausgeschnitten werden. In der Maschinensteuerung 20 oder alternativ in einer auf einem separaten Computer ablaufenden Programmier-Software werden bei der Erstellung des NC-Programms für die Laserschneidmaschine 10 jeweils vier der Werkstückteile 11 mit einem Stegabstand D von 10 mm zusammen verschachtelt, d. h. die Werkstückteile 11 werden in vier Gruppen G1, G2, G3, G4 zu je vier Werkstückteilen 21 eingeteilt bzw. gruppiert, die in Fig. 2 durch gestrichelte Linien dargestellt sind. Der (Steg-)Abstand D zwischen jeweils zwei benachbarten Gruppen G1, G2, G3, G4 beträgt ebenfalls D=10 mm.

Bevor die Außenkonturen 21 der Werkstückteile 11 der einzelnen Gruppen G1, G2, G3, G4 geschnitten werden, wird zwischen den einander zugewandten Au-ßenkonturen 21 der Werkstückteile der benachbarten Gruppen G1 und G2 sowie zwischen den einander zugewandten Außenkonturen 21 den Werkstückteile 11 der Gruppen G3 und G4 ein kontinuierlicher, geradlinig verlaufender Entlastungsschnitt 1a gesetzt, der in Fig. 2 punktiert dargestellt ist. In einem nachfolgenden Schritt wird zwischen den einander zugewandten Außenkonturen 21 der Gruppen G1 und G4 sowie zwischen den einander zugewandten Außenkonturen 21 den Gruppen G2 und G3 ein weiterer geradlinig verlaufender Entlastungsschnitt 1b gesetzt, der in Fig. 2 ebenfalls punktiert dargestellt ist. Die Entlastungsschnitte 1a, 1b verlaufen zwischen den einander zugewandten Außenkonturen 21 von jeweils zwei Werkstückteilen 11 der jeweiligen Gruppen G1, G2, G3, G4 innerhalb des Stegabstandes D. Hierdurch werden die Teilegruppen G1, G2, G3, G4 gegeneinander vor der entstehenden Wärme beim anschließenden trennenden Schneiden isoliert.

Nach dem Einbringen der Entlastungsschnitte 1a, 1b werden die sechzehn Werkstückteile 11 Gruppe für Gruppe G1, G2, G3, G4 vom Werkstück 2 getrennt: Zunächst werden die vier Werkstückteile 11 der ersten Gruppe G1 nacheinander vom Werkstück 12 getrennt, danach die vier Werkstückteile 11 der zweiten Gruppe G2, usw. Durch das Einbringen der Entlastungsschnitte 1a, 1b kann die Wärme, die beim trennenden Schneiden der Werkstückteile 11 einer jeweiligen Gruppe G1, G2, G3, G4 entsteht, im Wesentlichen auf die jeweilige Gruppe G1, G2, G3, G4 begrenzt werden. Auch die durch die Wärme entstehenden Spannungen in dem Werkstück 12 bleiben lokal begrenzt bzw. werden durch den jeweiligen Spalt entlang der Entlastungsschnitte 1a, 1b abgebaut.

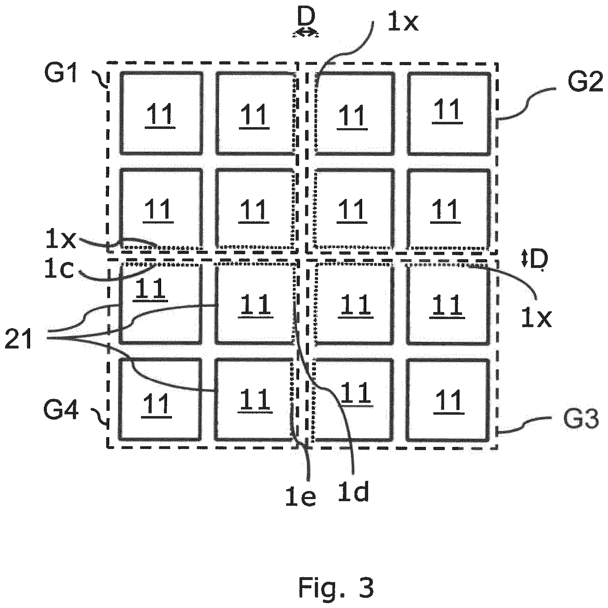

In **Fig. 3** sind wie in Fig. 2 die vier Gruppen G1, G2, G3, G4 von zu schneidenden Werkstückteilen 11 dargestellt, die von der Maschinensteuerung 20 oder der Programmier-Software gruppiert wurden. Bei dem in Fig. 3 gezeigten Beispiel werden mehrere Entlastungsschnitte 1c, 1d, 1e, 1x in das Werkstück 2 eingebracht, die jeweils entlang der Außenkonturen der Werkstückteile 11 verlaufen und die punktiert dargestellt sind. Im gezeigten Beispiel wird zunächst ein Entlastungsschnitt 1c entlang einer Außenkontur 21 eines ersten Werkstückteils 11 der vierten Gruppe G4 gesetzt, die einer Außenkontur 21 eines Werkstückteils 11 der benachbarten ersten Gruppe G1 zugewandt ist. Danach wird ein weiterer Entlastungsschnitt 1d entlang der Außenkontur 21 eines zweiten Werkstückteils 11 der vierten Gruppe G4 geschnitten. Der Entastungsschnitt 1d weist zwei Abschnitte auf, von denen der erste der benachbarten ersten Gruppe G1 zugewandt ist und von denen der zweite der benachbarten dritten Gruppe G3 zugewandt ist. Danach wird ein weiterer Entlastungsschnitt 1e entlang einer Außenkontur 21 eines dritten Werkstückteils 11 der vierten Gruppe G4 gesetzt, die der dritten Gruppe G3 zugewandt ist. Die drei Entlastungsschnitte 1c, 1d, 1e an den drei Werkstückteilen 11 der vierten Gruppe G4 sind voneinander beabstandet, d.h. diese verlaufen nicht kontinuierlich, und sind auf die jeweiligen Außenkonturen 21 begrenzt. In analoger Weise werden weitere Entlastungsschnitte 1x an den Werkstückteilen 11 der ersten bis dritten Gruppe G1, G2, G4 gesetzt, bevor die restlichen Außenkonturen 21 der einzelnen Werkstückteile 11 Gruppe für Gruppe G1, G2, G3, G4 trennend geschnitten werden, wie dies weiter oben in Zusammenhang mit Fig. 2 beschrieben wurde.

Die Entlastungsschnitte 1c, 1d, 1e, 1x verlaufen bei dem in Fig. 3 gezeigten Beispiel entlang der Außenkonturen 21 der jeweiligen Werkstückteile 11. Dies stellt eine besonders wirtschaftliche Art dar, die Entlastungsschnitte 1c, 1d, 1e, 1x zu setzen, da die Außenkonturen 21 der Werkstückteile 11 selbst durch eine geschickt gewählte Abarbeitungsreihenfolge als Entlastungsschnitte 1c, 1d, 1e, 1x dienen.

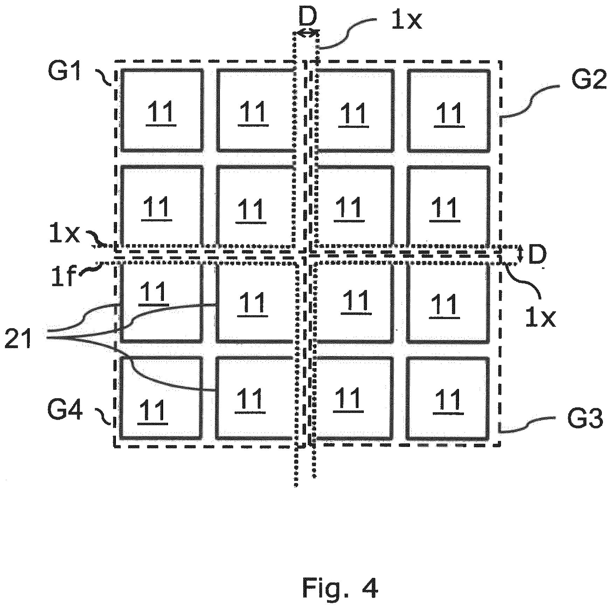

In **Fig. 4** sind wie in Fig. 2 und in Fig. 3 die vier Gruppen G1, G2, G3, G4 von zu schneidenden Werkstückteilen 11 dargestellt, die von der Maschinensteuerung 20 oder bei der Offline-Programmierung mittels der Programmier-Software gruppiert wurden. Wie in Fig. 3 werden auch in Fig. 4 Entlastungsschnitte 1f, 1x in das Werkstück 2 eingebracht, die jeweils entlang der Außenkonturen 21 der Werkstückteile 11 verlaufen und die punktiert dargestellt sind. Bei dem in Fig. 4 gezeigten Beispiel wird ein kontinuierlicher Entlastungsschnitt 1f entlang der Au-βenkonturen 21 von drei Werkstückteilen 11 der vierten Gruppe G4 gesetzt, d.h. der Entlastungsschnitt 1f wird anders als in Fig. 3 konturübergreifend ausgeführt und verbindet die Außenkonturen 21 der drei Werkstückteile 11 der vierten Gruppe G4 miteinander, um den Wärmefluss noch effizienter zu unterbinden. In analoger Weise werden weitere Entlastungsschnitte 1x entlang der Außenkonturen 21 von jeweils drei Werkstückteilen 11 der ersten bis dritten Gruppe G1, G2, G3 in das Werkstück 2 eingebracht, bevor die restlichen Außenkonturen 21 der einzelnen Werkstückteile 11 einer jeweiligen Gruppe G1, G2, G3, G4 geschnitten werden, um die jeweiligen Werkstückteile 11 vom Werkstück 12 zu trennen.

Die weiter oben beschriebenen Beispiele von Werkstückteilen 11 mit rechteckigen bzw. quadratischen Außenkonturen 21 können auf Werkstückteile mit beliebigen Konturen übertragen werden. Insbesondere können auch nicht linear verlaufende Entlastungsschnitte in das Werkstück 12 eingebracht werden.

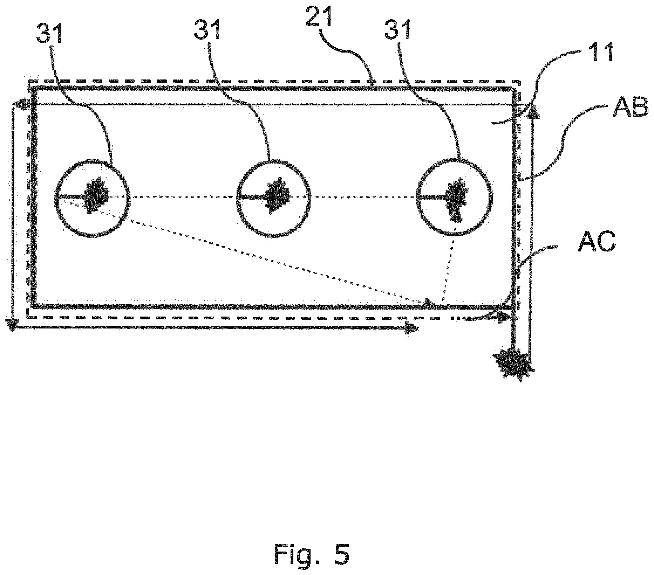

**Fig. 5** zeigt das trennende Schneiden eines Werkstückteils 11, das Innenkonturen 31 aufweist, die im gezeigten Beispiel kreisförmige Löcher bilden. Bei dem Werkstückteil 11 handelt es sich um eines der Mehrzahl der in Fig. 2 bis Fig. 4 gezeigten Werkstückteile 11.

Beim trennenden Schneiden des Werkstückteils 11 wird zunächst neben dem Werkstückteil 11 in das Werkstück 2 eingestochen, wie in Fig. 5 durch einen Stern angedeutet ist. Nachfolgend wird ein Abschnitt AB der Außenkontur 21 des Werkstückteils 11 geschnitten, welcher einen Großteil der gesamten Außenkontur 21 bildet und welcher in Fig. 5 gestrichelt dargestellt ist. In einem nachfolgenden Schritt werden die drei Innenkonturen 31 geschnitten, wozu jeweils in der Mitte einer jeweiligen Innenkontur in das Werkstück 12 eingestochen wird. Nach dem Schneiden der Innenkonturen 31 wird das Werkstückteil 11 entlang eines weiteren, punktiert dargestellten Abschnitts AC, der sich an den bereits geschnittenen Abschnitt AB anschließt, vom Werkstück 12 freigeschnitten. Die Bewegung des Schneidkopfs 15 über das Werkstück 2 während des Schneidens ist in Fig. 5 durch Pfeile angedeutet.

Durch das Schneiden eines Großteils der Gesamtlänge der Außenkontur 21 des Werkstückteils 11 bleibt die beim Schneiden der Innenkonturen 31 entstehende Wärme in dem nahezu freigeschnittenen Werkstückteil 11 "gefangen" und das umliegende Werkstück 12 verzieht sich nicht. Dabei nimmt der in Fig. 5 gestrichelt dargestellte, zuerst geschnittene Abschnitt AB vorzugsweise mindestens 60 %, bevorzugt mindestens 75 % und besonders bevorzugt mindestens 90 % der Gesamtlänge der Außenkontur 21 ein. Der Abschnitt AB sollte jedoch nicht mehr als 95 % der Gesamtlänge der Außenkontur 21 betragen, damit das Werkstückteil 11 beim Schneiden der Innenkonturen 31 noch sicher und verkippungsfrei mit dem Werkstück 12 verbunden bleibt. Anders als in Fig. 5 dargestellt ist, kann der Abschnitt AB der Außenkontur 21 in zwei oder mehr Teilabschnitten geschnitten werden, beispielsweise wenn wie in Fig. 3 oder in Fig. 4 Entlastungsschnitte 1c, 1d, 1e, 1f, 1x in das Werkstück 2 eingebracht werden, die entlang der Au-ßenkonturen 21 der Werkstückteile 11 verlaufen.

### Bezugszeichenliste

- 1a, 1b, 1c, 1d, 1e, 1f, 1x: Entlastungsschnitt
- 10: Laserschneidmaschine
- 11: Werkstückteil
- 12: plattenförmiges Werkstück
- 13: Werkstückauflage
- 14: Laserstrahlerzeuger
- 15: Schneidkopf
- 16: Bearbeitungsstrahl
- 17: Schneidgase
- 18: Schneidgasdüse
- 19: adaptive Optiken
- 20: Maschinensteuerung
- 21: Außenkontur
- 31: Innenkontur
- D: Abstand
- AB, AC: Abschnitt der Außenkontur
- G1, G2, G3, G4: Gruppe

## Patentansprüche

1. Verfahren zum trennenden Schneiden einer Mehrzahl von Werkstückteilen (11) aus einem plattenförmigen Werkstück (12) mittels eines Bearbeitungsstrahls (16), mit den Schritten:
Einteilen der Mehrzahl von Werkstückteilen (11) in mindestens zwei Gruppen (G1, G2, G3, G4),
Trennendes Schneiden der Werkstückteile (11) aus dem plattenförmigen Werkstück (12) Gruppe (G1, G2, G3, G4) für Gruppe (G1, G2, G3, G4),
**dadurch gekennzeichnet, dass**
vor dem trennenden Schneiden mindestens ein Entlastungsschnitt (1a, 1b, 1c, 1d, 1e, 1f, 1x) in das plattenförmige Werkstück (12) eingebracht wird,
wobei
entweder
ein oder mehrere Entlastungsschnitte (1c, 1d, 1e, 1f, 1x) entlang von denjenigen Außenkonturen (21) von mindestens zwei benachbarten Werkstückteilen (11) einer der Gruppen (G1, G2, G3, G4) in das plattenförmige Werkstück (12) eingebracht wird oder werden, die einer benachbarten Gruppe (G1, G2, G3, G4) zugewandt sind,
oder
mindestens ein Entlastungsschnitt (1a, 1b, 1x) zwischen einander zugewandten Außenkonturen (21) von Werkstückteilen (11) von mindestens zwei benachbarten Gruppen (G1, G2, G3, G4) in das plattenförmige Werkstück (12) eingebracht wird.

2. Verfahren nach Anspruch 1, **dadurch gekennzeichnet, dass** die einander zugewandten Außenkonturen (21) von Werkstückteilen (11) zweier benachbarter Gruppen (G1, G2, G3, G4) einen Abstand (D) von weniger als 12 mm aufweisen.

3. Verfahren nach Anspruch 1 oder 2, **dadurch gekennzeichnet, dass** entlang der einander zugewandten Außenkonturen (21) von Werkstückteilen (11) zweier benachbarten Gruppen (G1, G2, G3, G4) jeweils mindestens ein Entlastungsschnitt (1c, 1d, 1e, 1f, 1x) eingebracht wird.

4. Verfahren nach einem der vorhergehenden Ansprüche, **dadurch gekennzeichnet, dass** mindestens zwei getrennte Entlastungsschnitte (1c, 1d, 1e, 1x) entlang der Außenkonturen (21) der mindestens zwei benachbarten Werkstückteile (11) derselben Gruppe (G4) in das Werkstück (12) eingebracht werden.

5. Verfahren nach einem der Ansprüche 1 bis 3, **dadurch gekennzeichnet, dass** der mindestens eine Entlastungsschnitt (1f, 1x) die Außenkonturen (21) der mindestens zwei benachbarten Werkstückteile (11) miteinander verbindet.

6. Verfahren nach einem der vorhergehenden Ansprüche, **dadurch gekennzeichnet, dass** das trennende Schneiden eines Werkstückteils (11) der Mehrzahl von Werkstückteilen (11) folgende Schritte umfasst:
Schneiden eines Abschnitts (AB) einer Außenkontur (21) des Werkstückteils (11) zum teilweisen Trennen des Werkstückteils (11) von dem plattenförmigen Werkstück (12),
Schneiden mindestens einer Innenkontur (31) des Werkstückteils (11), sowie
Freischneiden des Werkstückteils (11) von dem Werkstück (12) entlang eines weiteren Abschnitts (AC) der Außenkontur (21).

7. Verfahren nach Anspruch 6, **dadurch gekennzeichnet, dass** der Abschnitt (AB), entlang dessen das Werkstückteil (11) teilweise von dem Werkstück (12) getrennt wird, mindestens 60%, bevorzugt mindestens 75 %, insbesondere mindestens 90% der Gesamtlänge (21) der Außenkontur (21) und nicht mehr als 95% der Gesamtlänge der Außenkontur (21) beträgt.

## Claims

1. Method for separating cutting of a plurality of workpiece parts (11) from a plate-like workpiece (12) by means of a processing beam (16), having the steps of:
dividing the plurality of workpiece parts (11) into at least two groups (G1, G2, G3, G4),
separating cutting of the workpiece parts (11) from the plate-like workpiece (12), group (G1, G2, G3, G4) by group (G1, G2, G3, G4), **characterised in that**,
prior to the separating cutting, at least one relief cut (1a, 1b, 1c, 1d, 1e, 1f, 1x) is made in the plate-like workpiece (12), wherein
either
one or more relief cuts (1c, 1d, 1e, 1f, 1x) is/are made in the plate-like workpiece (12) along the outer contours (21) of at least two adjacent workpiece parts (11) of one of the groups (G1, G2, G3, G4), which outer contours (21) face an adjacent group (G1, G2, G3, G4),
or
at least one relief cut (1a, 1b, 1x) is made in the plate-like workpiece (12) between mutually facing outer contours (21) of workpiece parts (11) of at least two adjacent groups (G1, G2, G3, G4).

2. Method according to claim 1, **characterised in that** the mutually facing outer contours (21) of workpiece parts (11) of two adjacent groups (G1, G2, G3, G4) have a spacing (D) of less than 12 mm.

3. Method according to claim 1 or 2, **characterised in that** at least one relief cut (1c, 1d, 1e, 1f, 1x) is made along the mutually facing outer contours (21) of workpiece parts (11) of two adjacent groups (G1, G2, G3, G4).

4. Method according to any one of the preceding claims, **characterised in that** at least two separate relief cuts (1c, 1d, 1e, 1x) are made in the workpiece (12) along the outer contours (21) of the at least two adjacent workpiece parts (11) of the same group (G4).

5. Method according to any one of claims 1 to 3, **characterised in that** the at least one relief cut (1f, 1x) connects the outer contours (21) of the at least two adjacent workpiece parts (11) to each other.

6. Method according to any one of the preceding claims, **characterised in that** the separating cutting of a workpiece part (11) of the plurality of workpiece parts (11) comprises the following steps:
cutting a portion (AB) of an outer contour (21) of the workpiece part (11) in order to partially separate the workpiece part (11) from the plate-like workpiece (12),
cutting at least one inner contour (31) of the workpiece part (11) and
cutting the workpiece part (11) free from the workpiece (12) along another portion (AC) of the outer contour (21).

7. Method according to claim 6, **characterised in that** the portion (AB) along which the workpiece part (11) is partially separated from the workpiece (12) is at least 60%, preferably at least 75%, in particular at least 90% of the overall length (21) of the outer contour (21) and no more than 95% of the overall length of the outer contour (21).

## Revendications

1. Procédé conçu pour dissocier par découpe une pluralité de parties (11) d'avec une pièce (12) en forme de plaque, au moyen d'un faisceau d'usinage (16), incluant les étapes consistant à :
répartir la pluralité de parties (11) de la pièce en au moins deux groupes (G1, G2, G3, G4),
dissocier par découpe, groupe (G1, G2, G3, G4) par groupe (G1, G2, G3, G4), lesdites parties (11) d'avec ladite pièce (12) en forme de plaque,
**caractérisé par le fait que**,
préalablement à la dissociation par découpe, au moins une incision de décharge 1a, 1b, 1c, 1d, 1e, 1f, 1x) est pratiquée dans la pièce (12) en forme de plaque,
auquel cas
soit
une ou plusieurs incision(s) de décharge (le, 1d, 1e, 1f, 1x) est (sont) pratiquée(s), dans la pièce (12) en forme de plaque, le long des profils extérieurs (21), tournés vers un groupe (G1, G2, G3, G4) voisin, d'au moins deux parties (11) de ladite pièce qui sont voisines dans l'un des groupes (G1, G2, G3, G4),
soit
au moins une incision de décharge (1a, 1b, 1x) est pratiquée, dans la pièce (12) en forme de plaque, entre des profils extérieurs (21), tournés les uns vers les autres, de parties (11) de ladite pièce dans au moins deux groupes (G1, G2, G3, G4) voisins.

2. Procédé selon la revendication 1, **caractérisé par le fait que** les profils extérieurs (21), tournés les uns vers les autres, de parties (11) de la pièce dans deux groupes (G1, G2, G3, G4) voisins, présentent un espacement (D) inférieur à 12 mm.

3. Procédé selon la revendication 1 ou 2, **caractérisé par le fait qu'**au moins une incision de décharge (le, 1d, 1e, 1f, 1x) est pratiquée à chaque fois le long des profils extérieurs (21), tournés les uns vers les autres, de parties (11) de la pièce dans deux groupes (G1, G2, G3, G4) voisins.

4. Procédé selon l'une des revendications précédentes, **caractérisé par le fait qu'**au moins deux incisions de décharge (le, 1d, 1e, 1x) distinctes sont pratiquées, dans la pièce (12), le long des profils extérieurs (21) des deux parties (11) de ladite pièce, à présence minimale, qui sont voisines dans le même groupe (G4).

5. Procédé selon l'une des revendications 1 à 3, **caractérisé par le fait que** l'incision de décharge (1f, 1x) à présence minimale relie mutuellement les profils extérieurs (21) des deux parties (11) de la pièce, à présence minimale, qui occupent des emplacements voisins.

6. Procédé selon l'une des revendications précédentes, **caractérisé par le fait que** la découpe séparative d'une partie (11) de la pièce, au sein de la pluralité de parties (11) de ladite pièce, inclut les étapes suivantes :
découpe d'un tronçon (AB) d'un profil extérieur (21) de la partie (11) de la pièce, en vue de séparer partiellement ladite partie (11) d'avec ladite pièce (12) en forme de plaque,
découpe d'au moins un profil intérieur (31) de ladite partie (11) de la pièce, et
dissociation par découpe de ladite partie (11), d'avec ladite pièce (12), le long d'un autre tronçon (AC) dudit profil extérieur (21).

7. Procédé selon la revendication 6, **caractérisé par le fait que** le tronçon (AB), le long duquel la partie (11) de la pièce est partiellement séparée d'avec ladite pièce (12), représente au moins 60 %, de préférence au moins 75 %, en particulier au moins 90 % de la longueur totale du profil extérieur (21), et n'excède pas 95 % de ladite longueur totale dudit profil extérieur (21).
